Europäisches Patentamt

European Patent Office

Office européen des brevets

(19)

(11) **EP 1 034 026 B1**

(12) **FASCICULE DE BREVET EUROPEEN**

(45) Date de publication et mention
de la délivrance du brevet:
**02.07.2003 Bulletin 2003/27**

(51) Int Cl.[7]: **B01D 53/86**, B01D 53/94,
B01J 23/34

(21) Numéro de dépôt: **98955718.6**

(86) Numéro de dépôt international:
**PCT/FR98/02496**

(22) Date de dépôt: **23.11.1998**

(87) Numéro de publication internationale:
**WO 99/026715 (03.06.1999 Gazette 1999/22)**

(54) **PROCEDE DE TRAITEMENT DE GAZ D'ECHAPPEMENT AVEC UNE COMPOSITION A BASE DE MANGANESE COMME PIEGE A NOx**

VERFAHREN ZUR REINIGUNG VON ABGASEN MIT EINER MANGAN BASIERTEN ZUSAMMENSETZUNG ALS NOX-FALLE

PROCESS FOR TREATING EXHAUST GASES WITH A COMPOSITION BASED ON MANGANESE FOR TRAPPING NOx

(84) Etats contractants désignés:
**AT BE DE ES FI FR GB IT SE**

(30) Priorité: **25.11.1997 FR 9714771**

(43) Date de publication de la demande:
**13.09.2000 Bulletin 2000/37**

(73) Titulaire: **RHODIA CHIMIE**
**92408 Courbevoie Cédex (FR)**

(72) Inventeurs:
• **HEDOUIN, Catherine**
**F-60270 Gouvieux (FR)**

• **SEGUELONG, Thierry**
**F-92800 Puteaux (FR)**
• **FRITZ, Arno**
**F-75005 Paris (FR)**

(74) Mandataire: **Dubruc, Philippe**
**Rhodia Services,**
**Direction de la Propriété Industrielle,**
**40, reu de la Haie-Coq**
**93306 Aubervilliers Cedex (FR)**

(56) Documents cités:
**WO-A-96/21506**          **WO-A-97/10892**
**WO-A-99/24153**

**Description**

La présente invention concerne un procédé de traitement de gaz d'échappement, selon les revendications 1-6.

On sait que la réduction des émissions des oxydes d'azote (NOx) des gaz d'échappement des moteurs d'automobiles notamment, est effectuée à raide de catalyseurs "trois voies" qui utilisent stoechiométriquement les gaz réducteurs présents dans le mélange. Tout excès d'oxygène se traduit par une détérioration brutale des performances du catalyseur.

Or, certains moteurs comme les moteurs diesel ou les moteurs essence fonctionnant en mélange pauvre (lean burn) sont économes en carburant mais émettent des gaz d'échappement qui contiennent en permanence un large excès d'oxygène d'au moins 5% par exemple. Un catalyseur trois voies standard est donc sans effet sur les émissions en NOx dans ce cas. Par ailleurs, la limitation des émissions en NOx est rendue impérative par le durcissement des normes en post combustion automobile qui s'étendent maintenant à ces moteurs.

Il existe donc un besoin réel d'un catalyseur efficace pour la réduction des émissions des NOx pour ce type de moteurs et, plus généralement, pour le traitement de gaz contenant des NOx.

Comme type de catalyseurs susceptibles de répondre à ce besoin, on a proposé des systèmes appelés pièges à NOx, qui sont capable d'oxyder NO en $NO_2$ puis d'adsorber le $NO_2$ ainsi formé. Dans certaines conditions, le $NO_2$ est relargué puis réduit en $N_2$ par des espèces réductrices contenues dans les gaz d'échappement. Ces pièges à NOx sont généralement à base de platine. Or, le platine est un élément cher. Il serait donc intéressant de pouvoir disposer d'un système sans platine pour réduire les coûts des catalyseurs.

Le document WO-A-9710892 décrit un procédé de piégage de $NO_x$ utilisant des catalyseurs comprenant de l'oxyde de manganèse, de cérium, de zirconium, du cuivre, de l'étain, du bismuth, de l'antimoine et du platine.

L'objet de l'invention est donc la mise au point d'un procédé sans utiliser nécessairement du platine.

Dans ce but et selon un premier mode de réalisation, la composition utlisée consiste essentiellement en du manganese, de l'oxyde de cerium ou un mélange d'oxyde de cérium et d'oxyde de zirconium et au moins un autre élément choisi parmi le terbium, le gadolinium, l'europium, le samarium, le néodyme et le praséodyme selon les revendications 1,2,5 et 6.

Selon un second mode de réalisation, la composition selon l'invention consiste essentiellement en du manganèse et du potassium, et de l'oxyde de cérium ou un mélange d'oxyde de

cérium et d'oxyde de zirconium et est obtenue par un procédé dans lequel au moins un des deux éléments manganèse et potassium est apporté au moins en partie par le permanganate de potassium, selon les revendications 3 et 4.

D'autres caractéristiques, détails et avantages de l'invention apparaîtront encore plus complètement à la lecture de la description qui va suivre, ainsi que des divers exemples concrets mais non limitatifs destinés à l'illustrer.

La composition utilisée se caractérise par la nature des éléments qui la constituent et qui ont été mentionnés plus haut. On notera ici que dans cette composition, l'oxyde de cérium ou le mélange d'oxyde de cérium et d'oxyde de zirconium peuvent former un support, les autres éléments formant une phase supportée. Ceci signifie que l'oxyde de cérium ou le mélange d'oxyde de cérium et d'oxyde de zirconium peuvent constituer le ou les éléments majoritaires de la composition sur lequel ou sur lesquels sont déposés les autres éléments. Pour simplifier, on parlera dans la suite de la description de support et de phase supportée mais on comprendra que l'on ne sortirait pas du cadre de la présente invention dans le cas où un élément décrit comme appartenant à la phase supporté était présent dans le support, par exemple en y ayant été introduit lors de la préparation même du support.

Dans le cadre du premier mode de réalisation mentionné plus haut, la composition peut comprendre une phase supportée qui est à base de manganèse en combinaison avec du terbium, du gadolinium, du samarium, du néodyme ou du praséodyme ou encore d'un mélange de manganèse et d'au moins deux de ces éléments. Selon une variante de ce premier mode de réalisation, la composition peut comprendre en outre un alcalin qui peut être plus particulièrement le sodium ou le potassium. Cet élément alcalin peut appartenir à la phase supportée.

Dans le cas du second mode de réalisation, la composition utilisée peut comprendre une phase supportée qui est à base de manganèse en combinaison avec du potassium. En outre, au moins un des deux éléments manganèse et potassium est apporté au moins en partie par du permanganate de potassium au cours du procédé de préparation de la composition. Il faut noter qu'un seul élément peut être apporté par le permanganate et seulement en partie. A l'opposé, et d'une manière préférée, il est aussi possible d'apporter les deux éléments totalement par la voie permanganate. Entre ces deux possibilités, toutes les autres variantes sont envisageables. Ce mode de réalisation permet d'obtenir des compositions présentant des capacités élevées d'adsorption des NOx.

Les quantités d'éléments de la phase supportée de la composition peuvent varier dans de larges proportions. La proportion minimale est celle en deçà de laquelle on n'observe plus d'activité d'adsorption des NOx. Ainsi, les proportions en manganèse peuvent varier entre 2 et 50%, plus particulièrement entre 5 et 30%. Celles en terbium, gadolinium, samarium, néodyme, praséodyme et/ou potassium peuvent varier entre 1 et 50%, plus particulièrement entre 5 et 30%. Ces proportions sont exprimées en % atomique par rapport à la somme du support et des éléments concernés de la phase supportée. On précise ici et pour l'ensemble de la description que le manganèse et les autres éléments sont présents sous forme oxyde dans les compositions décrites.

Les supports à base d'oxyde de cérium ou d'un mélange d'oxyde de cérium et d'oxyde de zirconium sont bien connus. On peut mentionner plus particulièrement pour les mélanges d'oxyde de cérium et d'oxyde de zirconium ceux décrits dans les demandes de brevets EP-A- 605274 et EP-A-735984.

On peut plus particulièrement utiliser les supports à base d'oxyde de cérium et de zirconium dans lesquels ces oxydes sont présents dans une proportion atomique cérium/zirconium d'au moins 1. Pour ces mêmes supports, on peut aussi utiliser ceux qui se présentent sous forme d'une solution solide. Dans ce cas, les spectres en diffraction X du support révèlent au sein de ce dernier l'existence d'une seule phase homogène. Pour les supports les plus riches en cérium, cette phase correspond en fait à celle d'un oxyde cérique $CeO_2$ cubique cristallisé et dont les paramètres de mailles sont plus ou moins décalés par rapport à un oxyde cérique pur, traduisant ainsi l'incorporation du zirconium dans le réseau cristallin de l'oxyde de cérium, et donc l'obtention d'une solution solide vraie.

Selon une variante de l'invention, on utilise des supports qui sont caractérisés par leur surface spécifique à certaines températures ainsi que par leur capacité de stockage de l'oxygène.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Society, 60, 309 (1938)".

Ainsi, on peut utiliser des supports à base d'un oxyde de cérium et d'un oxyde de zirconium dans une proportion atomique cérium/zirconium d'au moins 1 et présentant une surface spécifique après calcination 6 heures à 900°C d'au moins 35m$^2$/g. Une autre caractéristique des supports de cette variante est leur capacité de stockage de l'oxygène. Cette capacité mesurée à 400°C est d'au moins 1,5ml d'$O_2$/g. Elle peut être plus particulièrement d'au moins 1,8ml d'$O_2$/g. Cette capacité est déterminée par un test qui évalue la capacité du support ou du produit à successivement oxyder des quantités injectées de monoxyde de carbone d'oxygène et à consommer des quantités injectées d'oxygène pour réoxyder le produit. La méthode employée est dite alternée.

Le gaz porteur est de l'hélium pur à un débit de 10l/h. Les injections se font par l'intermédiaire de boucle contenant 16ml de gaz. Les quantités injectées de CO sont effectués en utilisant un mélange gazeux contenant 5% de CO dilué dans l'hélium tandis que les quantités injectées d'$O_2$ se font à partir d'un mélange gazeux contenant 2,5% d'$O_2$ dilué dans l'hélium. L'analyse des gaz est effectuée par chromatographie à l'aide d'un détecteur de conductivité thermique.

La quantité d'oxygène consommée permet de déterminer la capacité de stockage d'oxygène. La valeur caractéristique du pouvoir de stockage d'oxygène est exprimée en ml d'oxygène (dans les conditions normales de température et de pression) par gramme de produit introduit et elle est mesurée à 400°C. Les mesures de capacité de stockage d'oxygène données ici et dans le reste de la description sont faites sur des produits prétraités à 900°C sous air pendant 6 heures dans un four à moufle.

Dans le cas de la variante décrite ci-dessus et mettant en oeuvre des supports définis par leurs surface spécifiques et leur capacité de stockage de l'oxygène, le support peut être obtenu par un procédé dans lequel on prépare un mélange en milieu liquide contenant un composé du cérium et une solution de zirconium qui est telle que la quantité de base nécessaire pour atteindre le point équivalent lors d'un dosage acide-base de cette solution vérifie la condition rapport molaire $OH^-/Zr \leq 1,65$; on chauffe ledit mélange; on récupère le précipité obtenu et on calcine ce précipité.

Ce procédé va maintenant être décrit plus précisément.

La première étape de ce procédé consiste à préparer un mélange en milieu liquide, généralement en phase aqueuse, contenant au moins un composé de cérium et un composé de zirconium. Ce mélange est préparé en utilisant une solution de zirconium.

Cette solution de zirconium peut provenir de l'attaque acide d'un réactif comprenant du zirconium. Comme réactif approprié, on peut citer le carbonate, l'hydroxyde ou l'oxyde de zirconium. L'attaque peut être faite avec un acide inorganique comme l'acide nitrique, l'acide chlorhydrique ou l'acide sulfurique. L'acide nitrique est l'acide préféré, et on peut mentionner ainsi tout particulièrement l'utilisation d'un nitrate de zirconyle provenant de l'attaque nitrique d'un carbonate de zirconium. Ce peut être aussi un acide organique tel que l'acide acétique ou l'acide citrique.

Cette solution de zirconium doit présenter la caractéristique suivante. La quantité de base nécessaire pour atteindre le point équivalent lors d'un dosage acide-base de cette solution doit vérifier la condition rapport molaire $OH^-/Zr \leq 1,65$. Plus particulièrement, ce rapport peut être d'au plus 1,5 et encore plus particulièrement d'au plus 1,3. Généralement, la surface spécifique du produit obtenu a tendance à augmenter lorsque ce rapport décroît.

Le dosage acide-base se fait d'une manière connue. Pour l'effectuer dans des conditions optimales, on peut doser une solution qui a été amenée à une concentration d'environ $3.10^{-2}$ mole par litre exprimée en élément zirconium. On y ajoute sous agitation une solution de soude 1N. Dans ces conditions, la détermination du point équivalent (changement du pH de la solution) se fait d'une manière nette. On exprime ce point équivalent par le rapport molaire $OH^-/Zr$.

A titre de composés du cérium, on peut citer notamment les sels de cérium comme les sels de cérium IV tels que nitrates ou nitrates céri-ammoniacal par exemple, qui conviennent ici particulièrement bien. De préférence, on utilise du nitrate cérique. La solution de sels de cérium IV peut contenir du cérium à l'état céreux mais il est préférable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également utiliser une solution de nitrate cérique obtenue selon le procédé d'oxydation électrolytique d'une solution de nitrate céreux tel que décrit dans le document FR-A- 2 570 087, et qui peut constituer une matière première intéressante.

On notera ici que la solution aqueuse de sels de cérium IV peut présenter une certaine acidité libre initiale, par exemple une normalité variant entre 0,1 et 4 N. Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante:

$$r = \frac{n3 - n2}{n1}$$

dans laquelle n1 représente le nombre total de moles de Ce IV présentes dans la solution après neutralisation; n2 représente le nombre de moles d'ions OH⁻ effectivement nécessaires pour neutraliser l'acidité libre initiale apportée par la solution aqueuse de sel de cérium IV; et n3 représente le nombre total de moles d'ions OH⁻ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde $Ce(OH)_4$ (r=4). Dans la pratique, on se limite ainsi à des taux de neutralisation n'excédant pas 1, et de préférence encore n'excédant pas 0,5.

Les quantités de cérium et de zirconium présentes dans le mélange doivent correspondre aux proportions stoechiométriques requises pour l'obtention d'un support à la composition finale désirée.

Le mélange initial étant ainsi obtenu, on procède ensuite, conformément à la deuxième étape du procédé étudié, à son chauffage.

La température à laquelle est menée ce traitement thermique, aussi appelé thermohydrolyse, peut être comprise entre 80°C et la température critique du milieu réactionnel en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange aqueux contenant les espèces précitées dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 5 Bar (5. $10^5$ Pa) et 165 Bar (165. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures.

A l'issue de l'étape de chauffage, on récupère un précipité solide qui peut être séparé de son milieu par toute technique classique de séparation solide-liquide telle que par exemple filtration, décantation, essorage ou centrifugation.

Il peut être avantageux d'introduire après l'étape de chauffage, une base telle que par exemple une solution d'ammoniaque, dans le milieu de précipitation. Ceci permet d'augmenter les rendements de récupération en l'espèce précipitée.

Il est aussi possible d'ajouter de la même façon, après l'étape de chauffage, de l'eau oxygénée.

Le produit tel que récupéré peut ensuite être soumis à des lavages à l'eau et/ou à l'ammoniaque, à une température comprise entre la température ambiante et la température d'ébullition. Pour éliminer l'eau résiduelle, le produit lavé peut enfin, éventuellement, être séché, par exemple à l'air, et ceci à une température qui peut varier entre 80 et 300°C, de préférence entre 100 et 150°C, le séchage étant poursuivi jusqu'à l'obtention d'un poids constant.

On notera qu'il est bien entendu possible de répéter une ou plusieurs fois, à l'identique ou non, après récupération du produit et addition éventuelle de la base ou de l'eau oxygénée, une étape de chauffage telle que décrite ci-dessus, en remettant alors le produit en milieu liquide, notamment dans l'eau, et en effectuant par exemple des cycles de traitements thermiques.

Dans une dernière étape du procédé, le précipité récupéré, après éventuellement lavage et/ou séchage, est ensuite calciné. Selon un mode de réalisation particulier, il est possible après le traitement de thermohydrolyse et éventuellement après remise du produit en milieu liquide et un traitement supplémentaire de sécher directement le milieu réactionnel obtenu par atomisation.

La calcination est effectuée à une température comprise généralement entre 200 et 1200°C et de préférence entre 300 et 900°C. Cette température de calcination doit être suffisante pour transformer les précurseurs en oxydes, et elle est aussi choisie en fonction de la température d'utilisation ultérieure du support et en tenant compte du fait que la surface spécifique du produit est d'autant plus faible que la température de calcination mise en oeuvre est plus élevée. La durée de la calcination peut quant à elle varier dans de larges limites, par exemple entre 1 et 24 heures, de préférence entre 4 et 10 heures. La calcination est généralement opérée sous air, mais une calcination menée par exemple sous gaz inerte n'est bien évidemment pas exclue.

On notera que dans le cas d'un support à base d'oxyde de cérium, il est possible d'utiliser un support qui comprend, outre l'oxyde de cérium, un stabilisant de la surface spécifique qui est choisi dans le groupe des terres rares. Par terre rare on entend les éléments du groupe constitué par l'yttrium et les éléments de la classification périodique de numéro atomique compris inclusivement entre 57 et 71. La terre rare peut être plus particulièrement le praséodyme, le terbium ou le lanthane. Il est à noter qu'il est ainsi possible d'avoir une composition selon l'invention qui comprend une terre rare à la fois dans la phase supportée et dans le support.

Dans le procédé de préparation des compositions comprenant un support et une phase supportée, le dépôt de la phase supportée sur le support se fait de manière connue. On peut procéder en utilisant une méthode par imprégnation. On forme ainsi tout d'abord une solution ou une barbotine de sels ou de composés des éléments de la phase supportée.

A titre de sels, on peut choisir les sels d'acides inorganiques comme les nitrates, les sulfates ou les chlorures.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

On imprègne ensuite le support avec la solution ou la barbotine. Après imprégnation, le support est éventuellement séché puis il est calciné. Il est à noter qu'il est possible d'utiliser un support qui n'a pas encore été calciné préalablement à l'imprégnation.

On utilise plus particulièrement l'imprégnation à sec. L'imprégnation à sec consiste à ajouter au produit à imprégner un volume d'une solution aqueuse de l'élément qui est égal au volume poreux du solide à imprégner.

Dans le cas du second mode de réalisation décrit plus haut, on utilise bien entendu comme sel de manganèse et de potassium, le permanganate de potassium. Le cas échéant, la partie complémentaire en manganèse et/ou potassium peut être apportée par des sels du type décrit plus haut.

Dans le cas des compositions dont la phase supportée contient une terre rare, il peut être avantageux de déposer d'abord la terre rare et ensuite le manganèse.

Les compositions telles que décrites plus haut se présentent sous forme de poudres mais elles peuvent éventuellement être mises en forme pour se présenter sous forme de granulés, billes, cylindres ou nids d'abeille de dimensions variables. Les compositions peuvent aussi être utilisées dans des systèmes catalytiques comprenant un revêtement (wash coat) à propriétés catalytiques et à base de ces compositions, sur un substrat du type par exemple monolithe métallique ou en céramique.

Les gaz susceptibles d'être traités par la présente invention sont, par exemple, ceux issus de turbines à gaz, de chaudières de centrales thermiques ou encore de moteurs à combustion interne. Dans ce dernier cas, il peut s'agir notamment de moteurs diesel ou de moteurs fonctionnant en mélange pauvre.

Les compositions fonctionnent comme pièges à NOx lorsqu'elles sont mises en contact avec des gaz qui présentent une teneur élevée en oxygène. Par gaz présentant une teneur élevée en oxygène, on entend des gaz présentant un excès d'oxygène par rapport à la quantité nécessaire pour la combustion stoechiométrique des carburants et, plus précisément, des gaz présentant un excès d'oxygène par rapport à la valeur stoechiométrique $\lambda = 1$. La valeur $\lambda$ est corrélée au rapport air/carburant d'une manière connue en soi notamment dans le domaine des moteurs à combustion interne. De tels gaz sont ceux de moteur fonctionnant en mélange pauvre (lean burn) et qui présentent une teneur en oxygène (exprimée en volume) d'au moins 2% ainsi que ceux qui présentent une teneur en oxygène encore plus élevée, par exemple des gaz de moteurs du type diesel, c'est à dire d'au moins 5% ou de plus de 5%, plus particulièrement d'au moins 10%, cette teneur pouvant par exemple se situer entre 5 et 20%.

Les compositions peuvent être associées à des systèmes complémentaires de dépollution, comme des catalyseurs trois voies, qui sont efficaces lorsque la valeur de $\lambda$ est inférieure ou égale à 1 dans les gaz, ou encore à des systèmes à injection d'hydrocarbures ou à recyclage des gaz d'échappement (système EGR) pour les diesels.

Des exemples vont maintenant être donnés.

Dans ces exemples, le test catalytique est réalisé de la manière suivante :

On charge 0,15 g du piège à NOx en poudre dans un réacteur en quartz. La poudre utilisée a préalablement été compactée puis broyée et tamisée de manière à isoler la tranche granulométrique comprise entre 0,125 et 0,250 mm.

Le mélange réactionnel à l'entrée du réacteur a la composition suivante (en volume):

- NO : 300 vpm
- $O_2$ : 10 %
- $CO_2$ : 10 %
- $H_2O$ : 10 %
- $N_2$ : qsp 100 %

Le débit global est de 30 Nl/h.

La WH est de l'ordre de 150.000 $h^{-1}$.

Les signaux de NO et NOx (NOx = NO + $NO_2$) sont enregistrés en permanence, ainsi que la température dans le réacteur.

Les signaux de NO et NOx sont donnés par un analyseur de NOx ECOPHYSICS, basé sur le principe de la chimiluminescence.

L'évaluation des pièges à NOx comporte deux parties;

- tout d'abord, on détermine la température d'adsorption maximale, en adsorbant les NOx à 125 °C pendant 15 minutes, et en chauffant ensuite sous le même mélange à 600 °C. Le profil des NOx montre un maximum d'adsorption à une certaine température.
- dans un deuxième temps, on détermine la quantité adsorbée en isotherme à la température d'adsorption maximale.

La quantité est calculée par intégration.

EXEMPLE 1

Cet exemple concerne la préparation et l'utilisation d'un catalyseur dont la phase supportée est à base de manganèse et de potassium.

On utilise du permanganate de potassium (99,5% $KMnO_4$) et, à titre de support, de l'oxyde de cérium HSA5® de Rhône-Poulenc, de volume poreux déterminé à l'eau de 0,35$cm^3$/g et qui n'est pas calciné avant le dépôt de l'élément actif. Les teneurs en Mn et K déposées sont égales à 16% respectivement( [Mn] ou [K]/( [Mn]+[K]+[CeO_2] )= 0,16 ). Le potassium et le manganèse sont déposés par imprégnation à sec, le support est imprégné par une solution de $KMnO_4$ de volume égal au volume poreux du support et de concentration permettant d'atteindre les teneurs en Mn et K recherchées. Le support imprégné est séché ensuite à l'étuve à 110°C puis il est calciné à 750°C pendant 2h avec une montée en température de 5°C/min. Sa surface spécifique BET (SBET) est égale à 9$m^2$/g.

EXEMPLES 2 à 7

Matières premières:

On utilise du nitrate de manganèse $Mn(NO_3)_2$, du nitrate de praséodyme $Pr(NO_3)_3$, du nitrate de gadolinium $Gd(NO_3)_3$, du nitrate de samarium $Sm(NO_3)_3$, du nitrate de néodyme $Nd(NO_3)_3$, du nitrate de terbium $Tb(NO_3)_3$.

Le support utilisé est de l'oxyde de cérium calciné 2 heures à 500°C.

Teneurs en éléments supportés:

1<sup>ére</sup>étape: Dépôt du 1<sup>er</sup> élément supporté

Elle consiste à déposer l'élément supporté à savoir 10% atomique dans le cas de Gd, Sm, Nd, Pr, Tb par rapport à la somme des nombres de moles de l'élément et de moles d'oxyde de cérium à savoir:

$$[X]/([X]+[CeO_2])=0,1$$

avec X= Gd, Sm, Nd, Pr, Tb

2ième étape:Dépôt du 2ième élément supporté

Elle consiste à déposer le deuxième élément supporté à savoir 10% atomique de Mn par rapport à la somme des nombres de moles des éléments et de moles d'oxyde de cérium à savoir:

$$[Y]/([X]+[Y]+[CeO_2])=0,1$$

avec Y= Mn

Voies de synthèses:

On utilise dans tous les cas l'imprégnation à sec.

Imprégnation à sec:

Elle consiste à imprégner le support considéré avec l'élément supporté dissout dans une solution de volume égal au volume poreux du support (déterminé à l'eau : $0.4 cm^3/g$) et de concentration permettant d'atteindre le dopage recherché.
Dans le cas présent les éléments sont imprégnés sur le support l'un à la suite de l'autre.
Le protocole opératoire est le suivant:

- Imprégnation à sec du premier élément
- Séchage à l'étuve (110°C, 2H)
- Calcination 2h 500°C (5°C/min)
- Imprégnation à sec du deuxième élément
- Séchage à l'étuve (110°C, 2H)
- Calcination 2h 500°C (5°C/min)

Produits obtenus:

Exemple 2 : [ Gd]=10% atomique, [Mn]=10% atomique, SBET= $107 m^2/g$
Exemple 3 :[ Sm]=10% atomique,[Mn]=10% atomique, SBET=$107 m^2/g$
Exemple 4:[ Nd]=10% atomique,[Mn] =10% atomique, SBET=$106 m^2/g$
Exemple 5 : [Pr]=10% atomique, [Mn]=10% atomique, SBET= $100 m^2/g$
Exemple 6 : [Tb]=10% atomique, [Mn]=10% atomique, SBET= $125 m^2/g$
Exemple 7 : [Mn]=10% atomique, SBET= $128 m^2/g$

Pour l'exemple 7 un seul élément a été déposé.

EXEMPLES 8 à 10

On utilise les mêmes matières premières et le même support que dans les exemples 2 à 7 avec en outre du nitrate de sodium et du nitrate de potassium.
On procède en trois étapes. La première consiste à déposer le manganèse dans une quantité de 10% atomique par rapport à la somme des nombres de moles de manganèse et de moles d'oxyde de cérium à savoir:

$$[Mn] / [Mn] + [CeO_2] = 0,1$$

Dans la deuxième étape, on dépose le deuxième élément supporté dans une quantité de 10% atomique par rapport à la somme des nombres de moles des éléments et de moles d'oxyde de cérium à savoir:

$$[Y] / [Mn] + [Y] + [CeO_2] = 0,1$$

avec Y=Pr, Nd

Dans la troisième étape, on dépose le troisième élément supporté dans une quantité de 5% atomique par rapport à la somme des nombres de moles des éléments et de moles d'oxyde de cérium à savoir:

$$[Z] / [Mn] + [Y] + [Z] + [CeO_2] = 0,05$$

avec Z=Na, K

On imprègne à sec comme dans les exemples 2 à 7.

Produits obtenus:

Exemple 8: [Mn] = 10% atomique, [Nd]=10% atomique , [K]=5% atomique, SBET= 91 $m^2$/g
Exemple 9: [Mn] = 10% atomique, [Pr]=10% atomique , [K]=5% atomique, SBET= 92 $m^2$/g
Exemple 10: [Mn] = 10% atomique, [Pr]=10% atomique , [Na]=5% atomique, SBET= 90 $m^2$/g

Les résultats du test catalytique sont donnés dans le tableau ci-dessous.

| Exemple | Quantité adsorbée ($10^{-5}$ mole NO/150mg de produit) | Température d'adsorption maximale (°C) |
|---|---|---|
| 1 | 6,9 | 370 |
| 2 | 3,5 | 230 |
| 3 | 3,6 | 240 |
| 4 | 3,8 | 240 |
| 5 | 4 | 240 |
| 6 | 3,4 | 240 |
| 7 | 4,2 | 225 |
| 8 | 4,3 | 270 |
| 9 | 4,2 | 280 |
| 10 | 4,9 | 270 |

**Revendications**

**1.** Procédé de traitement de gaz d'échappement de moteurs à combustion interne en vue de la réduction des émissions des oxydes d'azote par piégeage desdits oxydes, **caractérisé en ce qu'**on utilise une composition consistant essentiellement en du manganèse, en de l'oxyde de cérium et en outre en au moins un autre élément choisi parmi le terbium, le gadolinium, l'europium, le samarium et le néodyme.

**2.** Procédé de traitement de gaz d'échappement de moteurs à combustion interne en vue de la réduction des émissions des oxydes d'azote par piégeage desdits oxydes, **caractérisé en ce qu'**on utilise une composition consistant essentiellement en du manganèse, en un mélange d'oxyde de cérium et d'oxyde de zirconium et en outre en au moins un autre élément choisi parmi le terbium, le gadolinium, l'europium, le samarium et le néodyme, le mélange d'oxyde de cérium et d'oxyde de zirconium formant un support, le manganèse et l'autre élément formant une phase supportée qui a été déposée sur le mélange d'oxyde de cérium et d'oxyde de zirconium.

**3.** Procédé de traitement de gaz d'échappement de moteurs à combustion interne en vue de la réduction des émissions des oxydes d'azote par piégeage desdits oxydes, **caractérisé en ce qu'**on utilise une composition consistant essentiellement en du manganèse, en du potassium et en de l'oxyde de cérium et qui a été obtenue par une voie dans laquelle au moins un des deux éléments manganèse et potassium est apporté au moins en partie par le permanganate de potassium, le manganèse et le potassium étant présents en une quantité minimale telle qu'en deçà de laquelle on n'observe plus d'activité d'adsorption des NOx.

**4.** Procédé de traitement de gaz d'échappement de moteurs à combustion interne en vue de la réduction des émissions des oxydes d'azote par piégeage desdits oxydes, **caractérisé en ce qu'**on utilise une composition consistant essentiellement en du manganèse, du potassium et en un mélange d'oxyde de cérium et d'oxyde de zirconium, et qui a été obtenue par une voie dans laquelle au moins un des deux éléments manganèse et potassium est apporté au moins en partie par le permanganate de potassium, le mélange d'oxyde de cérium et d'oxyde de zirconium formant un support, le manganèse et le potassium formant une phase supportée qui a été déposée sur le mélange d'oxyde de cérium et d'oxyde de zirconium, le manganèse et le potassium étant présents en une quantité minimale telle qu'en deçà de laquelle on n'observe plus d'activité d'adsorption des NOx.

**5.** Procédé de traitement de gaz d'échappement de moteurs à combustion interne présentant un excès d'oxygène par rapport à la valeur stoechiométrique λ = 1, en vue de la réduction des émissions des oxydes d'azote par piégeage desdits oxydes, **caractérisé en ce qu'**on utilise une composition consistant essentiellement en du manganèse, en de l'oxyde de cérium et en outre en du praséodyme.

**6.** Procédé de traitement de gaz d'échappement de moteurs à combustion interne présentant un excès d'oxygène par rapport à la valeur stoechiométrique λ = 1, en vue de la réduction des émissions des oxydes d'azote par piégeage desdits oxydes, **caractérisé en ce qu'**on utilise une composition consistant essentiellement en du manganèse, en un mélange d'oxyde de cérium et d'oxyde de zirconium et en outre en du praséodyme, le mélange d'oxyde de cérium et d'oxyde de zirconium formant un support, le manganèse et le praséodyme formant une phase supportée qui a été déposée sur le mélange d'oxyde de cérium et d'oxyde de zirconium.

**7.** Procédé selon l'une des revendications 1 , 3 ou 5, **caractérisé en ce qu'**on utilise une composition dans laquelle l'oxyde de cérium forme un support, les autres éléments formant une phase supportée.

**8.** Procédé selon l'une des revendications 1 à 4, **caractérisé en ce qu'**on traite un gaz présentant un excès d'oxygène par rapport à la valeur stoechiométrique λ = 1.

**9.** Procédé selon l'une des revendications précédentes, **caractérisé en ce que** la teneur en oxygène des gaz est d'au moins 5% en volume.

**Patentansprüche**

**1.** Verfahren zur Behandlung von Abgas aus Verbrennungsmotoren im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus Ceroxid und außerdem aus wenigstens einem anderen Element, das ausgewählt ist aus Terbium, Gadolinium, Europium, Samarium und Neodym, besteht.

**2.** Verfahren zur Behandlung von Abgas aus Verbrennungsmotoren im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus einer Mischung von Ceroxid und Zirkoniumoxid und außerdem aus wenigstens einem anderen Element besteht, das ausgewählt ist aus Terbium, Gadolinium, Europium, Samarium und Neodym, wobei die Mischung aus Ceroxid und Zirkoniumoxid einen Träger bildet, das Mangan und das andere Element eine getragene Phase bilden, die auf der Mischung aus Ceroxid und Zirkoniumoxid abgeschieden wurde.

**3.** Verfahren zur Behandlung von Abgas aus Verbrennungsmotoren im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus Kalium und aus Ceroxid besteht und welche auf eine Weise erhalten wurde, bei welcher wenigstens eines der zwei Elemente Mangan und Kalium wenigstens teilweise durch Kaliumpermanganat geliefert wird, wobei das Mangan und das Kalium in einer derart minimalen Menge vorliegen, dass man unterhalb von dieser keine Adsorptionsaktivität für NOx mehr beobachtet.

**4.** Verfahren zur Behandlung von Abgas aus Verbrennungsmotoren im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus Kalium und aus einer Mischung von Ceroxid und Zirkoniumoxid besteht und welche auf eine Weise erhalten wurde, bei der wenigstens eines der zwei Elemente Mangan und Kalium wenigstens teilweise durch Kaliumpermanganat geliefert wird, wobei die Mischung von Ceroxid und Zirkoniumoxid einen Träger bildet, das Mangan und das Kalium eine getragene Phase bilden, die auf der Mischung aus Ceroxid und Zirkoniumoxid abgeschieden wurde, wobei das Mangan und das Kalium in einer derart minimalen Menge vorliegen, dass man unterhalb von dieser keine Adsorptionsaktivität für NOx mehr beobachtet.

**5.** Verfahren zur Behandlung von Abgas aus Verbrennungsmotoren, welches einen Überschuss an Sauerstoff im Vergleich zu dem stöchiometrischen Wert $\lambda$ = 1 aufweist, im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus Ceroxid und außerdem aus Praseodym besteht.

**6.** Verfahren zur Behandlung von Abgas aus Verbrennungsmotoren, welches einen Überschuss an Sauerstoff im Vergleich zu dem stöchiometrischen Wert $\lambda$ = 1 aufweist, im Hinblick auf die Verringerung der Emissionen von Stickoxiden durch Einfangen der Oxide, **dadurch gekennzeichnet, dass** man eine Zusammensetzung verwendet, die im wesentlichen aus Mangan, aus einer Mischung von Ceroxid und Zirkoniumoxid und außerdem aus Praseodym besteht, wobei die Mischung aus Ceroxid und Zirkoniumoxid einen Träger bildet, das Mangan und das Praseodym eine getragene Phase bilden, die auf der Mischung aus Ceroxid und Zirkoniumoxid abgeschieden wurde.

**7.** Verfahren nach einem der Ansprüche 1, 3 oder 5, **dadurch gekennzeichnet, dass** man eine Zusammensetzung verwendet, in welcher das Ceroxid einen Träger bildet, wobei die anderen Elemente eine getragene Phase bilden.

**8.** Verfahren nach einem der Ansprüche 1 bis 4, **dadurch gekennzeichnet, dass** man ein Gas behandelt, das einen Überschuss an Sauerstoff im Vergleich zu dem stöchiometrischen Wert $\lambda$ = 1 aufweist.

**9.** Verfahren nach einem der vorhergehenden Ansprüche, **dadurch gekennzeichnet, dass** der Gehalt an Sauerstoff des Gases wenigstens 5 Volumen-% beträgt.

## Claims

**1.** Process for the treatment of exhaust gases from internal combustion engines for the purpose of reducing emissions of nitrogen oxides by trapping the said oxides, **characterized in that** use is made of a composition composed essentially of manganese, of cerium oxide and, in addition, of at least one other element chosen from terbium, gadolinium, europium, samarium and neodymium.

**2.** Process for the treatment of exhaust gases from internal combustion engines for the purpose of reducing emissions of nitrogen oxides by trapping the said oxides, **characterized in that** use is made of a composition composed essentially of manganese, of a mixture of cerium oxide and of zirconium oxide, and, in addition, of at least one other element chosen from terbium, gadolinium, europium, samarium and neodymium, the mixture of cerium oxide and of zirconium oxide forming a support, the manganese and the other element forming a supported phase which has been deposited on the mixture of cerium oxide and of zirconium oxide.

**3.** Process for the treatment of exhaust gases from internal combustion engines for the purpose of reducing emissions of nitrogen oxides by trapping the said oxides, **characterized in that** use is made of a composition composed essentially of manganese, of potassium and of cerium oxide and which has been obtained by a route in which at least one of the two elements manganese and potassium is contributed at least partly by potassium permanganate, the manganese and the potassium being present in a minimum amount such that below this amount no more activity in adsorbing $NO_x$ is observed.

**4.** Process for the treatment of exhaust gases from internal combustion engines for the purpose of reducing emissions of nitrogen oxides by trapping the said oxides, **characterized in that** use is made of a composition composed essentially of manganese, of potassium and of a mixture of cerium oxide and of zirconium oxide and which has been obtained by a route in which at least one of the two elements manganese and potassium is contributed at least partly by potassium permanganate, the mixture of cerium oxide and of zirconium oxide forming a suppprt, the manganese and the potassium forming a supported phase which has been deposited on, the mixture of cerium oxide and of zirconium oxide, the manganese and the potassium being present in a minimum amount such that below this amount no more activity in adsorbing $NO_x$ is observed.

**5.** Process for the treatment of exhaust gases from internal combustion engines exhibiting an excess of oxygen with respect to the stoichiometric value $\lambda = 1$ for the purpose of reducing emissions of nitrogen oxides by trapping the said oxides, **characterized in that** use is made of a composition composed essentially of manganese, of cerium oxide and, in addition, of praseodymium.

**6.** Process for the treatment of exhaust gases from internal combustion engines exhibiting an excess of oxygen with respect to the stoichiometric value $\lambda = 1$ for the purpose of reducing emissions of nitrogen oxides by trapping the said oxides, **characterized in that** use is made of a composition composed essentially of manganese, of a mixture of cerium oxide and of zirconium oxide and, in addition, of praseodymium, the mixture of cerium oxide and of zirconium oxide forming a support, the manganese and the praseodymium forming a supported phase which has been deposited on the mixture of cerium oxide and of zirconium oxide.

**7.** Process according to either of Claims 1, 3 and 5, **characterized in that** use is made of a composition in which the cerium oxide forms a support, the other elements forming a supported phase.

**8.** Process according to one of Claims 1 to 4, **characterized in that** the treatment is carried out of a gas exhibiting an excess of oxygen with respect to the stoichiometric value $\lambda = 1$.

**9.** Process according to one of the preceding claims, **characterized in that** the oxygen content of the gases is at least 5% by volume.